# EUROPÄISCHE PATENTSCHRIFT

(11) **EP 2 114 536 B1**
(45) Veröffentlichungstag und Bekanntmachung des Hinweises auf die Patenterteilung: **25.02.2015**
(21) Anmeldenummer: 07821581.1
(22) Anmeldetag: 19.10.2007
(51) Int. Cl.: A62C 35/68, G05D 16/18, A62C 13/64, F16K 15/03

(54) **Vorrichtung zur Steuerung einer Gas-Hochdruck-Feuerlöschanlage**
Device for controlling a fire-extinguishing system of the high-pressure gas type
Dispositif pour réguler un système d'extinction d'incendie à haute pression de gaz

(30) Priorität: 10.02.2007 DE 102007006665; 09.05.2007 DE 202007006631 U
(43) Veröffentlichungstag der Anmeldung: 11.11.2009
(73) Patentinhaber: TOTAL WALTHER GmbH, Feuerschutz und Sicherheit, 51069 Köln (DE)
(72) Erfinder: LÜDERS, Bruno, 50129 Bergheim (DE); WILDERMUTH, Gregor, 51373 Leverkusen (DE)
(74) Vertreter: Von Kreisler Selting Werner - Partnerschaft von Patentanwälten und Rechtsanwälten mbB
(86) Internationale Anmeldenummer: PCT/EP2007/061217
(87) Internationale Veröffentlichungsnummer: WO 2008/095549

(56) Entgegenhaltungen:
- DE-U1- 20 000 365
- US-A- 2 806 481

## Beschreibung

Die Erfindung betrifft eine Vorrichtung zur Steuerung des Druckes einer Gas-Hochdruck-Feuerlöschanlage, bei der ein Löschgas mit 150 bis 300 bar Hochdruck in mindestens einem Druckgasbehälter, vorzugsweise einer Hochdruck-Gasflasche mit einem Flaschenventil, gelagert und der Druck des Löschgases zwischen der Gasflasche und einer Löschleitung reduziert wird.

Derartige Feuerlöschanlagen werden aus wirtschaftlichen Gründen mit dem unter hohem Druck gelagerten Löschmittel, wie Argon, Argonite, Stickstoff, Inergen oder dergleichen betrieben, wie der DE 42 20 062 C1 zu entnehmen ist. Dabei wird das Löschmittel in den Hochdruck-Gasflaschen in komprimierter Form gelagert. Bei diesen Permanentgasen steigt die verfügbare Gasmenge mit dem angewendeten Druck, so dass die Bevorratung von Gasen mit hohem Druck besonders wirtschaftlich ist.

Um Feuerlöschanlagen wirtschaftlich zu betreiben, wurde der Druck des aus der Hochdruck-Gasflasche austretenden Löschgases vor Eintritt in die Löschleitung reduziert. Auch ist bekannt, eine zweite Druckreduzierung vorzunehmen (DE 200 00 365 U).

Die bisher verwendeten Druckreduziereinrichtungen, insbesondere bei der Mehrfachreduzierung, konnten wegen der statischen Druckreduzierung und einer mangelnden Berechnungssoftware nicht sicherstellen, dass das Löschgas mit dem gewünschten niederen Druck in das Löschleitungs-System eingeführt wird. Außerdem sind die bisherig verwendeten Reduziereinrichtungen sehr materialaufwendig.

Ein Ventil an einem Löschgasbehälter, das mit einem Steuerdruck beaufschlagt wird, ist beschrieben in US 5,899,275. Dieses Ventil enthält einen Steuerkolben, der mit einem Steuerdruck beaufschlagt wird und mit einem Stößel auf ein weiteres Ventil einwirkt, das den Auslass des Druckgasbehälters verschließt. Hier muss der Steuergasdruck das weitere Ventil entgegen der Wirkung des Behälterdruckes öffnen. Eine derartige Ventilkonstruktion eignet sich nur für Gasflaschen mit einem relativ niedrigen Druck, weil der Steuergasdruck gegen den Flaschendruck anarbeiten muss.

In WO 2006/110149 A1 ist ein druckgesteuertes Löschventil beschrieben, bei dem der Behälterdruck radial auf einen kegelstumpfförmigen Kolben wirkt, der zur Änderung des Durchlassquerschnittes verschiebbar ist. Wegen der konischen Form des Kolbens übt der Behälterdruck eine axial wirkende Kraftkomponente auf den Kolben aus. Auch diese Vorrichtung ist daher für Hochdruckanwendungen nicht geeignet.

In US 2 806 481 A ist ein druckgesteuertes Ventil beschrieben, welches im geschlossenen Zustand frei von Verchiebekraftkomponenten durch den Gasdruck des Druckgasbehälters ist.

Der Erfindung liegt die Aufgabe zugrunde, eine Vorrichtung zur Steuerung einer Gas-Hochdruck-Feuerlöschanlage zu schaffen, um mit einfachsten Mitteln sicherzustellen, dass das Löschgas mit dem gewünschten niederen Druck in die Löschleitung eintritt.

Die erfindungsgemäße Vorrichtung ist durch den Patentanspruch 1 definiert. Sie ist dadurch gekennzeichnet, dass das Steuerventil derart ausgebildet ist, dass der Hochdruck des Druckgasbehälters keine Verschiebekraftkomponente auf den Steuerkolben ausübt.

Die Kraftkompensation des Behälterdrucks im Steuerventil hat zur Folge, dass der Steuerkolben ausschließlich durch den Steuerdruck verstellt wird und nicht von dem Hochdruck abhängig ist. Damit besteht die Möglichkeit einer sehr genauen Regelung des Ausgangsdrucks selbst dann, wenn der Behälterdruck gegenüber dem Ausgangsdruck sehr hoch ist. Somit kann eine mehrstufige Druckreduzierung entfallen.

Dadurch, dass das Druckreduzierventil als Steuerventil ausgebildet ist, werden die bekannten, unter Hochdruck stehenden Bauteile zwischen dem Flaschenventil und dem Löschleitungs-System, wie zusätzliche Reduziereinrichtungen, mit den erforderlichen unter Hochdruck stehenden Verbindungsteilen und Hochdruckschläuchen vermieden. Die Reduzierung des Löschgasdruckes ist somit vereinfacht. Mittels der Steuerdruckkammer und dem vorgegebenen Steuerdruck wird erreicht, dass der Druck des aus dem Steuerventil austretenden Löschgases in das Löschleitungs-System gegenüber dem vorgegebenen Steuerdruck nicht überschritten wird. Somit ist sichergestellt, dass sich im Löschleitungs-System kein höherer als der eingestellte Druck einstellen kann, weil dieser innerhalb des Steuerventils dynamisch geregelt wird. Somit werden Schäden durch zu hohen Druck am Rohrsystem vermieden.

Ein weiterer Vorteil der Erfindung besteht darin, dass durch Fortfall der zusätzlichen Reduziereinrichtungen das Handling bei der Montage der Feuerlöschanlage vereinfacht ist. Des Weiteren wird der Einsatz einer Berechnungssoftware für hydraulische Drücke im Bereich von 200 bis 300 bar nicht mehr benötigt. Auch dies ist ein besonderer Vorteil der Erfindung, weil bisher noch keine sichere Berechnungssoftware auf dem Markt frei verfügbar ist.

Zum Zweck der Montage des Steuerventils ist ein Behälteraufsatz vorgesehen, der zwischen Flaschenhals und Steuerventil eingebaut ist. Der Behälteraufsatz weist einen Ventilsockel auf, der mittels eines Flaschenstutzens auf den Druckgasbehälter aufschraubbar ist, wobei der Ventilsockel über einen in die Ventilsockel-Bohrung eingeschraubten Ventilanschluss mit dem Steuerventil verbunden ist.

Ausführungsbeispiele der Erfindung und die Arbeitsweise des Steuerventils werden anhand der Zeichnungen näher beschrieben.

Es zeigen:
- Fig. 1: eine Gesamtansicht einer nicht zur Erfindung gehörenden Ausführungsform des Steuerventils mit Ventilsockel im Schnitt,
- Fign. 2 - 5: die einzelnen Arbeitsphasen des Steuerventils nach Fig. 1,
- Fig. 6: eine Ausführungsform des erfindungsgemäßen Steuerventils,
- Fig. 7: den Anbau des Steuerventils an ein Behälterventil und des erfindungsgemäßen
- Fig. 8: eine zweite Ausführungsform des erfindungsgemäßen Steuerventils, welches in Abhängigkeit von dem Steuerdruck ein Behälterventil öffnet, so dass der Hochdruck nicht ständig das Steuerventil beaufschlagt.

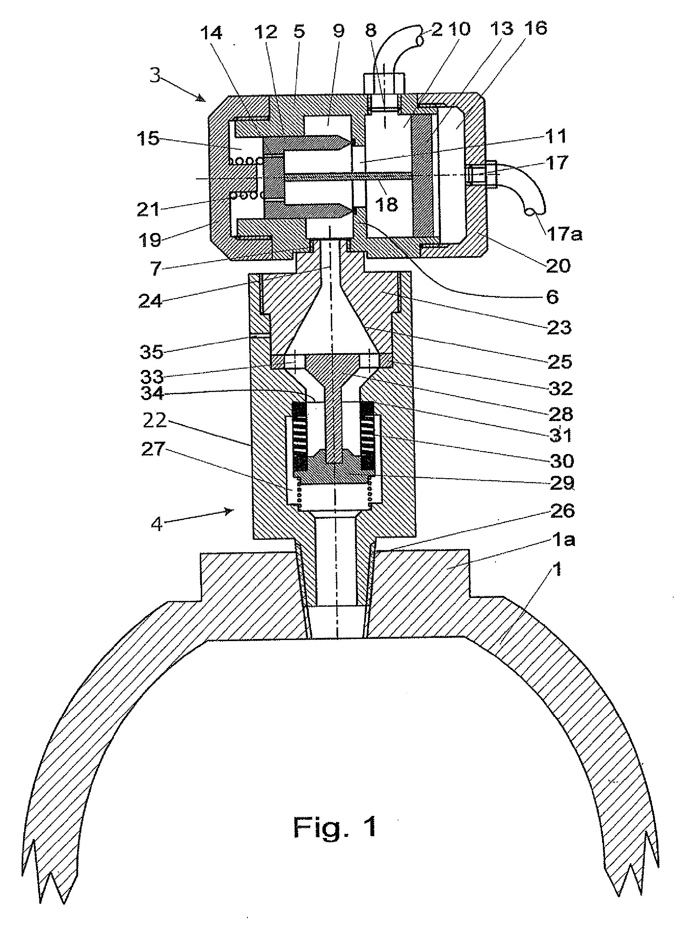

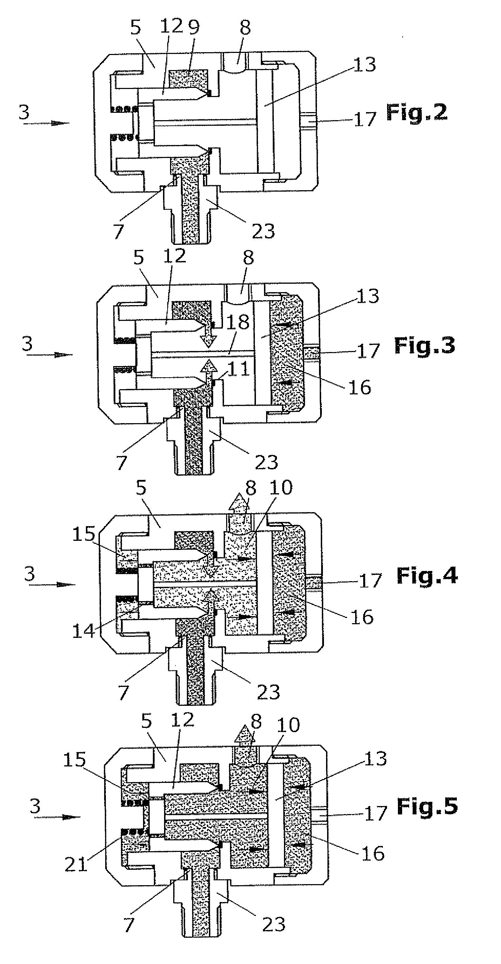

Das Steuerventil 3 nach Fig. 1 - 5 besteht aus einem Ventilgehäuse 5 mit einer Trennwand 6, die eine Übergangsöffnung 11 aufweist, wobei auf einer Seite der Trennwand 6 im Boden des Steuerventils 3 eine Einlassöffnung 7 für das Hochdruck-Löschgas und auf der anderen Seite der Trennwand 6 in der Decke des Steuerventils 3 eine Auslassöffnung 8 für das druckreduzierte Löschgas vorgesehen ist. Eine Seite des Ventilgehäuses 5 ist mit einem Deckel 19 und die andere Seite des Ventilgehäuses 5 ist mit einem Deckel 20 versehen. Rechts neben der Trennwand 6 ist ein Steuerkolben 13 und links neben der Trennwand 6 ist ein Verschlusskolben 12 eingebaut, die mittels einer Verbindungsstange 18 miteinander verbunden sind. Der Verschlusskolben 12 ist derart ausgebildet, dass er je nach Stellung einen druckdichten Abschluss zur Übergangsöffnung 11 in der Trennwand 6 oder eine Öffnung der Übergangsöffnung 11 sicherstellt. Der Verschlusskolben 12 bildet im Bereich der Einlassöffnung 7 eine Hochdruckkammer 9 und auf der Rückseite mit dem Deckel 19 eine Kompensationskammer 15, die mittels einer Kompensationsöffnung 14 im Verschlusskolben 12 mit der Arbeitsdruck-Kammer 10 verbunden ist. Innerhalb der Kompensationskammer 15 ist eine Verschlussfeder 21 eingebaut. Der im Bereich der Auslassöffnung 8 angebrachte Steuerkolben 13 bildet gemeinsam mit dem Deckel 20 eine Steuerdruckkammer z.6 und mit der Trennwand 6 eine Arbeitsdruckkammer so. Der Deckel 20 ist mit einem Steuerdruckanschluss 17 versehen, an den eine Steuerdruckleitung 17a für das Steuergas angeschlossen ist.

Auf dem mit einem Hochdruckgas von beispielsweise 150 bis 300 bar gefüllten Druckgasbehälter 1, vorzugsweise eine Hochdruck-Gasflasche, ist ein Behälteraufsatz 4 aufgeschraubt, der den Druckgasbehälter 1 während der Montage geschlossen hält. Das Steuerventil 3 wird mit dem Behälteraufsatz 4 verbunden. Dieser besteht aus einem Ventilsockel 22 mit einem im oberen Teil eingelassenen Ventilanschlussstück 23, das mit der Einlassöffnung 7 des Steuerventils 3 verbunden wird. Dazu weist das Ventilanschlussstück 23 eine sich nach unten erweiternde Füllöffnung 25 und darüber eine Verbindungsbohrung 24 auf. Der untere Teil des Ventilsockels 22 ist zum Einschrauben in den Behälterhals 1a des Druckgasbehälters 1 als Gewindestutzen 26 ausgebildet. Im mittleren Teil weist der Ventilsockel 22 eine Ventilsockel-Bohrung 27 mit einer eine Füllöffnung 34 umgebenden Ringschulter 31 auf, an der sich ein Federdichtungselement 30 abdichtend abstützt. Das Ventilanschlussstück 23 drückt gegen einen Stempel 28. Am unteren Teil des Stempels 28 ist ein Ventilteller 29 angebracht. Das Federdichtungselement 30 ist so vorgespannt, dass es für das Gas durchlässig ist. Das Federdichtungselement wird durch den Flaschendruck zusammengedrückt und dichtet damit die Füllöffnung 34 ab.

Bei der Verbindung des Steuerventils 3 mit dem Behälteraufsatz 4 hält der Stempel 28 mit dem Federdichtungselement 30 die Füllöffnung 34 geschlossen. Beim Aufschrauben des Ventilanschlussstücks 23 wird zunächst eine dichte Verbindung zwischen Ventilanschlussstück und Ventilsockel 22 hergestellt. Der Stempel 28 mit dem Federdichtungselement 30 hält die Füllöffnung 34 noch geschlossen. Bei noch weiterem Eindrehen des Ventilanschlussstücks 23 in den Ventilsockel 22 drückt das Ventilanschlussstück 23 gegen die Grundplatte 32 des Stempels 28, der den Ventilteller in Richtung auf den Druckgasbehälter 1 drückt. Dadurch werden die Federdichtungselemente 30 auseinandergezogen, so dass das Hochdruckgas zwischen den geöffneten Federdichtelementen mit seinem Druck von 150 bis 300 bar durch die Füllöffnung 34 in die Hochdruckkammer 9 einfließen kann.

Die Wirkungsweise des Steuerventils 3 der Figuren 1 - 5 wird nachfolgend näher beschrieben.

Zunächst ist die Übergangsöffnung 11 in der Trennwand 6 durch den Verschlusskolben 12 geschlossen. Über die Steuerdruck-Leitung 17a wird die Steuerdruckkammer 16 mit dem vorgegebenen Steuerdruck eines Steuergases, von z. B. 60 bar, beaufschlagt. Dieser Druck kann beliebig eingestellt werden und bestimmt den Druck, mit dem das Löschgas aus der Auslassöffnung 8 in das mit der Löschleitung 2 verbundene Rohrnetz einströmt. Durch den Steuerdruck wird der Steuerkolben 13 in das Steuerventil 3 gedrückt. Der Steuerkolben 13 betätigt mittels der Verbindungsstange 18 den Verschlusskolben 12, wodurch die Übergangsöffnung 11 und damit das Steuerventil 3 geöffnet wird. Das Gas strömt jetzt in die Arbeitsdruckkammer 10 und über die Kompensationsöffnungen 14 in die Kompensationskammer 15. Aus der Arbeitsdruckkammer 10 strömt das Gas in das Löschleitungsnetz 2, füllt es und der Druck baut sich im Rohrnetz und in der Arbeitsdruckkammer 10 auf. Wird der Druck in der Arbeitsdruckkammer 10 größer als der Druck in der Steuerdruckkammer 16, bewegen sich der Verschlusskolben 12 und der Steuerkolben 13 in die andere Richtung, so dass die Übergangsöffnung 11 geschlossen wird. Unterstützt wird der Schließvorgang durch die in der Kompensatiönskammer 15 eingebaute Verschlussfeder 21. Durch den entstehenden Druckabfall im Rohrnetz und der größer werdenden Druckdifferenz zur Steuerdruckkammer 16, bewegen sich der Steuerkolben 13 und der Verschlusskolben 12 in die rückwärtige Richtung, so dass sich die Übergangsöffnung 11 wieder öffnet. Dieser Vorgang setzt sich so lange fort, bis der Druck in dem Druckgasbehälter 1 kleiner ist als der Steuerdruck. Danach bleibt das Steuerventil geöffnet, bis der Druckgasbehälter 1 leer ist.

Mit der Ausgestaltung des Steuerventils wird erreicht, dass zwischen der Arbeitsdruckkammer 10 und der Steuerdruckkammer 16 druckmäßig immer ein Gleichgewicht besteht und folglich in der Löschleitung 2 der Druck des Löschgases nicht höher wird als der Druck des Steuergases.

Die modulare Bauweise von Steuerventil 3 und Behälteraufsatz 4 mit einer Entlastungsbohrung 35 ermöglicht eine Demontage des Steuerventils 3 von dem Behälteraufsatz 4 bei unter Druck stehendem Druckgasbehälter 1. Auch dies ist ein weiterer Vorteil der Erfindung, der mit den bekannten Flaschenventilen nicht erreicht wird.

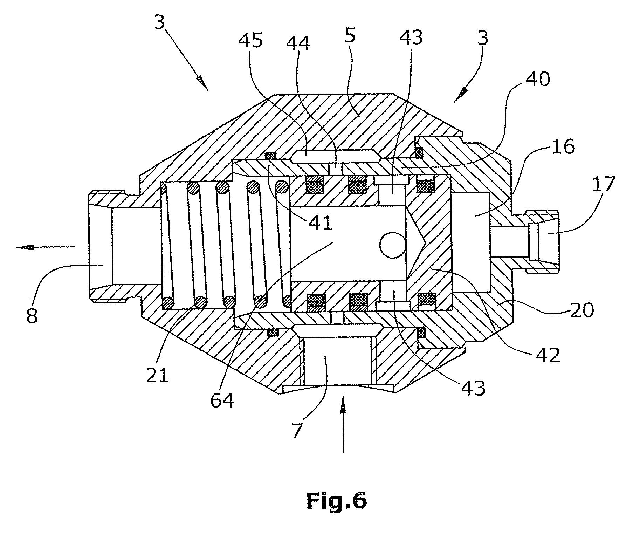

Das Steuerventil 3 gemäß Figur 6 weist ein Ventilgehäuse 5 auf, das an einem Ende die Auslassöffnung 8 in einem Schraubstutzen enthält. Vom entgegengesetzten Ende her ist in das Ventilgehäuse 5 eine Zylinderbuchse 40 mit Ventildeckel 20 eingesetzt und verschraubt. Diese enthält den Steuerdruckanschluss 17 und die Steuerdruckkammer 16. Die Zylinderbuchse 40 enthält eine Zylinderbohrung 41, in der ein Kolben 42 verschiebbar ist. Der Kolben 42 übt die Funktionen des Verschlusskolbens 12 und des Steuerkolbens 13 des ersten Ausführungsbeispiels gemeinsam aus. Er enthält Dichtringe zur Abdichtung an der Zylinderbohrung 41. Eine Verschlussfeder 21, die am Ventilgehäuse 5 abgestützt ist, drückt den Kolben 42 in Richtung auf den Steuerdruckanschluss 17. Der Steuerdruck wirkt also der Verschlussfeder 21 entgegen.

Der Kolben 42 weist eine geschlossene Vorderwand auf, die die Steuerdruckkammer 16 begrenzt. Er ist im übrigen hohl, zum rückwärtigen Ende hin offen und bildet die Arbeitsdruckkammer 64. Der Kolben weist Querbohrungen 43 auf, die mit Querbohrungen 44 der Zylinderbuchse 40 zur Deckung kommen können. Die Querbohrungen 44 befinden sich im Bereich einer umlaufenden Nut, welche mit der Einlassöffnung 7 in Verbindung steht und somit die Hochdruckkammer 45 bildet. Der Behälterdruck wirkt durch die Querbohrungen 44 radial auf den Kolben 42. Dadurch werden keine Schiebungskräfte in axialer Richtung auf den Kolben 42 ausgeübt. Der Kolben 42 wird nur durch den Steuerdruck der Steuerdruckkammer 16 bewegt und von dem Druck in der Auslassöffnung 8 bzw. in der Löschleitung 2 (Figur 1) beeinflusst. Diese Drücke wirken ausschließlich axial auf den Kolben 42.

Mit dem erfindungsgemäßen Ventil kann der Steuerdruck variabel, beispielsweise von 10 bar bis 100 bar eingestellt werden. Der Steuerdruck bestimmt immer den Druck in der zum Rohrnetz führenden Löschleitung 2, unabhängig von dem Druck im Druckgasbehälter 1.

Der Druck im Druckgasbehälter gelangt über die Einlassöffnung 7 in die ringförmige Hochdruckkammer 45. Er wirkt durch die Querbohrungen 44 ausschließlich radial auf den Kolben 42, ohne jede axiale Kraftkomponente. Daher wird der in dem Druckgasbehälter herrschende Hochdruck so kompensiert, dass er keine Verschiebekraftkomponente auf den Steuerkolben 42 ausübt. Der Steuerkolben wird somit nur von dem Steuerdruck in der Steuerdruckkammer 16 verstellt.

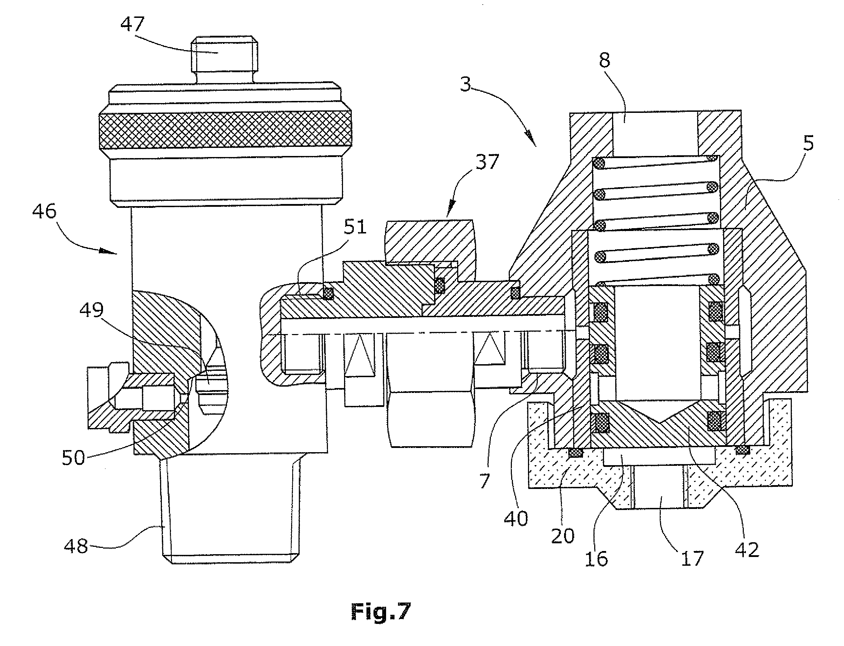

An die Einlassöffnung 7 des Ventilgehäuses 5 wird gemäß Figur 7 ein Adapter 37 angeschlossen. Dies ist eine Rohrkupplung mit Verschraubung, die das Ventilgehäuse 5 mit einem Behälterventil 46 verbindet. Das Behälterventil 46 ist bekannt. Das Behälterventil hat ein langgestrecktes Gehäuse, das an einem Ende einen Anschluss 47 für den Auslösedruck und am entgegengesetzten Ende einen Anschluss 48 zum Aufschrauben auf einen Druckgasbehälter aufweist. Das Behälterventil enthält einen Kolben 49, der durch eine Feder gegen einen Sitz 50 gedrückt gehalten wird und dadurch den Durchgang vom Druckgasbehälter zum Auslass 51 versperrt. Durch Anlegen eines Auslösedrucks an den Anschluss 47 wird der Kolben 49 bewegt, um den Weg für das unter hohem Druck stehende Löschgas freizugeben. Der Auslass 51 ist mit dem Adapter 37 verbunden. Das Behälterventli 46 und das Steuerventil 3 bilden zusammen mit dem Adapter 37 eine starre Einheit von H-förmiger Gestalt.

Anstelle des Auslösedruckes, der an Anschluss 47 gelegt wird, kann auch eine mechanische, elektrische oder hydraulische Beaufschlagung des Behälterventils 46 erfolgen. Das Behälterventil gibt den Hochdruck für das Steuerventil 3 frei. Daher ist das Steuerventil 3 nicht ständig dem Hochdruck ausgesetzt, sondern nur dann, wenn das Behälterventil 46 geöffnet hat. Von diesem Zeitpunkt an kann der Kolben 42 durch Druckbeaufschlagung des Steueranschlusses 17 seine Druckregelfunktion ausüben.

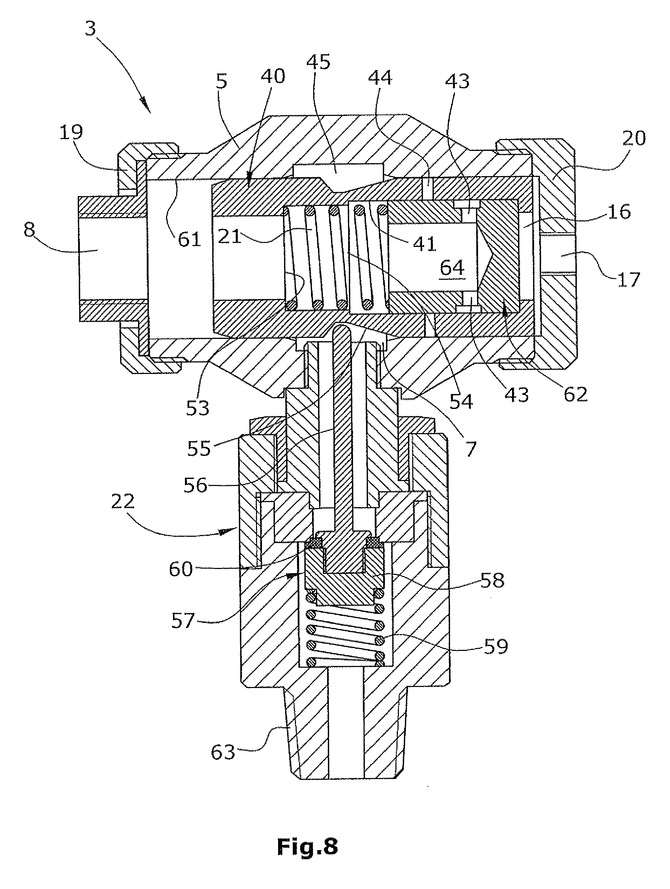

Bei dem Ausführungsbeispiel von Figur 8 ist das Ventilgehäuse 5 auf einem Ventilsockel 22 montiert, der an den Druckgasbehälter angeschraubt wird. Das Ventilgehäuse 5 ist mit den beiden Deckeln 19 und 20 verschlossen. Der Deckel 20 weist den Steuerdruckanschluss 17 für das Steuergas auf und der Deckel 19 hält einen Stutzen, weicher die Auslassöffnung 8 enthält. In dem Ventilgehäuse befindet sich eine Gehäusebohrung 61, in der eine Zylinderbuchse 40 in Längsrichtung verschiebbar ist. Die Zylinderbuchse 40 enthält einen Kolben 62, der mit seiner Stirnwand die Steuerdruckkammer 16 begrenzt und in einer Zylinderbohrung 41 der Zylinderbuchse bewegbar ist. Der Kolben 62 wird von einer Verschlussfeder 21 in Richtung auf den Steuerdruckanschluss 17 gedrückt.

Die Verschlussfeder 21 ist an einer Ringschulter 53 der Zylinderbuchse 40 abgestützt. Eine weitere Ringschulter dient als Anschlag 54 für den Kolben 62.

Der Kolben 62 ist mit Querbohrungen 43 versehen, die von außen in die Hochdruckkammer 45 hineinführen. Die Querbohrungen 43 arbeiten mit Querbohrungen 44 der Zylinderbuchse 40 zusammen. Wenn der Kolben 62 durch den Steuerdruck in der Zylinderbohrung 41 bis zum Anschlag 54 vorgeschoben wurde, kommen die Querbohrungen 43 und 44 miteinander in Verbindung.

Das Ventilgehäuse 5 enthält eine ringförmige Nut, weiche die Hochdruckkammer 45 bildet. Wenn die Querbohrungen 43 und 44 in den Bereich der Kammer 45 gelangen, wird der Behälterdruck durch die Querbohrungen in die Arbeitsdruckkammer 64 und von dieser zur Auslassöffnung 8 geleitet.

Die Außenseite der Zylinderbuchse 40 enthält eine Nockenkontur 55 in Form einer umlaufenden Vertiefung mit schrägen Flanken. In diese Nockenkontur dringt der Stößel 56 eines im Ventilsockel enthaltenen Behälterventils 57 ein. Das Behälterventil 57 weist einen Ventilkörper 58 auf, der von einer Feder 59 gegen einen Ventilsitz 60 gedrückt wird. Wenn das Ende des Stößels 56 sich in der Mulde der Nockenkontur 55 befindet, so wie dies in Figur 8 dargestellt ist, drückt die Feder 59 den Ventilkörper 58 in die Schließstellung. Wird durch den Druck in der Steuerdruckkammer 16 der Kolben 62 verschoben, so kommen zuerst die Querbohrungen 43 und 44 zur Deckung und anschließend wird die Zylinderbuchse 40 gemäß Figur 8 nach links verschoben. Dadurch gelangt die Spitze des Stößels 56 auf die Schrägflanke der Nockenkontur 55. Der Stößel 56 drückt den Ventilkörper 58 in die Öffnungsstellung, so dass das Behälterventil 57 öffnet und das in dem Druckgasbehälter unter Hochdruck stehende Löschgas zum Einströmen in das Steuerventil 3 freigibt. Der Gewindestutzen 63 wird an den Druckgasbehälter angeschlossen.

Auch bei dem Ausführungsbeispiel nach Figur 8 ist sichergestellt, dass die Hochdruckkammer 45 nicht ständig dem unter Hochdruck stehenden Löschgas ausgesetzt ist. Vielmehr wird der Hochdruck durch das normalerweise geschlossene Behälterventil 57 von dem Steuerventil 3 ferngehalten. Durch das Steuergas am Steuerdruckanschluss 17 wird sowohl das Öffnen des Behälterventils 57 bewirkt als auch die Druckregelung durch das Steuerventil 3. Das Steuerventil mit dem Ventilsockel 22 stellt mit einfachen Mitteln sicher, dass das Löschgas mit dem gewünschten niederen Druck in die Löschleitung eintritt, ohne dass die Hochdruckkammer ständig mit dem unter Hochdruck stehenden Löschgas gefüllt ist.

## Patentansprüche

1. Vorrichtung zur Steuerung des Ausgangsdrucks einer Gas-Hochdruck-Feuerlöschanlage, die mindestens einen Druckgasbehälter (1) und ein Druckreduzierventil aufweist, wobei das Druckreduzierventil ein druckgesteuertes, selbstregulierendes Steuerventil (3) ist, das eine mit einem Steuerdruck beaufschlagte Steuerdruckkammer (16) und einen von dem Steuerdruck gesteuerten Steuerkolben (42,62) enthält,
**dadurch gekennzeichnet,**
**dass** das Steuerventil derart ausgebildet ist, dass der Hochdruck des Druckgasbehälters (1) keine Verschiebekraftkomponente auf den Steuerkolben (42,62) ausübt, wobei der die Steuerdruckkammer (16) begrenzende Steuerkolben (42, 62) in einer Zylinderbohrung (41) in einem Ventilgehäuse (5) gegen ein Federmittel (21) verschiebbar ist und an dem Steuerkolben und der Zylinderbohrung zusammenwirkende Durchlässe (43, 44) vorgesehen sind, die bei einer definierten Stellung des Steuerkolbens eine Einlassöffnung (7) mit einer Auslassöffnung (8) verbinden.

2. Vorrichtung nach Anspruch 1, **dadurch gekennzeichnet, dass** das Steuerventil (3) lösbar an einem Ventilsockel (22) befestigt ist, der einerseits mittels eines Gewindestutzens (26) an den Druckgasbehälter (1) anschraubbar und andererseits über ein in eine Ventilsockelbohrung einsetzbares Ventilanschlussstück (23) mit einer Einlassöffnung (7) des Steuerventils (3) verbunden ist.

3. Vorrichtung nach Anspruch 2, **dadurch gekennzeichnet, dass** in die Ventilsockelbohrung (27) ein mit einem Ventilteller (29) versehener Stempel (28) eingebaut ist, der durch Einsetzen des Ventilanschlussstücks (23) verschiebbar ist, und dass der Stempel (28) zwischen dem Ventilteller (29) und einer Ringschulter (31) des Ventilsockels (22) von einem Federdichtungselement (30) umgeben ist.

4. Vorrichtung nach Anspruch 1, **dadurch gekennzeichnet, dass** die Zylinderbohrung (41) Bestandteil einer Zylinderbuchse (40) ist, die in dem Ventilgehäuse (5) enthalten ist.

5. Vorrichtung nach Anspruch 1, **dadurch gekennzeichnet, dass** das Ventilgehäuse (5) mit seiner Einlassöffnung (7) an einem Adapter (37) befestigt ist, der seinerseits an einem Behälterventil (46) angebracht ist, wobei das Behälterventil einen Öffnungsmechanismus aufweist, der auf ein Auslösesignal hin den Druck des Druckgasbehälters an den Adapter (37) liefert.

6. Vorrichtung nach Anspruch 4, **dadurch gekennzeichnet, dass** die Zylinderbuchse (40) in dem Ventilgehäuse (5) verschiebbar ist und eine Nockenkontur (55) aufweist, die in Abhängigkeit von Verschiebestellung der Zylinderbuchse ein Behälterventil (57) öffnet.

7. Vorrichtung nach Anspruch 6, **dadurch gekennzeichnet, dass** das gegen den Steuerkolben (62) drückende Federmittel (21) an der Zylinderbuchse (40) abgestützt ist.

8. Vorrichtung nach Anspruch 6 oder 7, **dadurch gekennzeichnet, dass** der Steuerkolben (62) gegen einen Anschlag (54) der Zylinderbuchse (40) stößt und diese mitnimmt.

## Claims

1. A device for controlling the output pressure of a fire extinguishing system of the high-pressure gas type, comprising at least one compressed gas container (1) and a pressure reduction valve, said pressure reduction valve being a pressure-controlled, self-regulating control valve (3) comprising a control pressure chamber (16) on which a control pressure is applied and a control piston (42, 62) controlled by said control pressure,
**characterized in**
**that** the control valve is configured such that the high pressure of the compressed gas container (1) exerts no displacing force component on the control piston (42, 62), wherein the control piston (42, 62) defining the control pressure chamber (16) is displaceable in a cylinder bore (41) in the valve housing (5) against the action of a spring means (21), and that the control piston and the cylinder bore are provided with cooperating passages (43, 44) which, in a defined position of the control piston, connect an inlet opening (7) with an outlet opening (8).

2. The device of claim 1, **characterized in that** the control valve (3) is removably fastened to a valve socket (22) which, on the one side, is adapted to be screwed to the compressed gas container (1) by means of a threaded fitting (26) and which, on the other side, is connected to an inlet opening (7) of the control valve (3) by means of a valve connector fitting (23) insertable into a valve socket bore.

3. The device of claim 2, **characterized in that** a plunger (28) with a valve disk (29) is mounted in valve socket bore (27), which plunger is displaceable by insertion of the valve connector fitting (23), and that the plunger (28) is surrounded by a spring seal element (30) between the valve disk (29) and a ring shoulder (31) of the valve socket (22).

4. The device of claim 1, **characterized in that** the cylinder bore (41) is a part of a cylinder bushing (40) included in the valve housing (5).

5. The device of claim 1, **characterized in that** the valve housing (5) is fastened to an adapter (37) by its inlet opening (7), which adapter is in turn fastened to a container valve (46), the container valve comprising an opening mechanism supplying the pressure of the compressed gas container to the adapter (37) in response to a triggering signal.

6. The device of claim 4, **characterized in that** the cylinder bushing (40) is displaceable within the valve housing (5) and has a cam contour (55) that opens a container valve (57) in dependence on the displacement position of the cylinder bushing.

7. The device of claim 6, **characterized in that** the spring means (21) pressing against the control piston (62) is supported at the cylinder bushing (40).

8. The device of claim 6 or 7, **characterized in that** the control piston (62) abuts against an abutment (54) of the cylinder bushing (40) and takes the same along.

## Revendications

1. Dispositif de commande de la pression de sortie d'une installation d'extinction d'incendie à gaz sous haute pression qui présente au moins un récipient de gaz sous pression (1) et une soupape de réduction de la pression, la soupape de réduction de la pression étant une soupape de commande (3) commandée par la pression, autorégulée, qui renferme une chambre de pression de commande (16) chargée par une pression de commande, et un piston de commande (42, 62) commandé par la pression de commande,
**caractérisé**
**en ce que** la soupape de commande est constituée de telle sorte que la haute pression du récipient de gaz sous pression (1) n'exerce aucune composante de force de translation sur le piston de commande (42, 62), le piston (42, 62), qui limite la chambre de pression de commande (16), étant mobile en translation à l'encontre d'un moyen élastique (21) dans un alésage de cylindre (41) contenu dans un corps de soupape (5), cependant que des passages (43, 44) ménagés dans le piston de commande et dans l'alésage de cylindre relient une ouverture d'entrée (7) à une ouverture de sortie (8) dans une position définie du piston de commande.

2. Dispositif selon la revendication 1, **caractérisé en ce que** la soupape de commande (3) est fixée de façon démontable à un socle de soupape (22) qui, d'un côté, peut être vissé sur le récipient de gaz sous pression (1) au moyen d'une tubulure filetée (26) et, d'un autre côté, est relié à une ouverture d'entrée (7) de la soupape de commande (3) par l'intermédiaire d'une pièce de raccordement de soupape (23) qui peut être mise en place dans un perçage du socle de soupape,.

3. Dispositif selon la revendication 2, **caractérisé en ce que**, dans le perçage (27) du socle de soupape, est logé un poussoir (28) muni d'une tête de soupape (29) et qui peut être déplacé en translation par la mise en place de la pièce de raccordement de soupape (23), et **en ce qu'**entre la tête de soupape (29) et un épaulement annulaire (31) du socle de soupape (22), le poussoir (28) est entouré d'un élément d'étanchéité élastique (30).

4. Dispositif selon la revendication 1, **caractérisé en ce que** l'alésage de cylindre (41) est une partie constitutive d'une chemise de cylindre (40) qui est contenue dans le corps de soupape (5).

5. Dispositif selon la revendication 1, **caractérisé en ce que** le corps de soupape (5) est fixé avec son ouverture d'entrée (7) à un adaptateur (37) qui, de son côté, est monté sur une soupape (46) du récipient, la soupape du récipient présentant un mécanisme d'ouverture qui, en présence d'un signal de déclenchement, transmet la pression du récipient de gaz sous pression à l'adaptateur (37).

6. Dispositif selon la revendication 4, **caractérisé en ce que** la chemise de cylindre (40) peut se déplacer en translation dans le corps de soupape (5) et présente un profil de came (55) qui ouvre une soupape de récipient (57) en fonction de la position de translation de la chemise de cylindre.

7. Dispositif selon la revendication 6, **caractérisé en ce que** le moyen élastique (21) qui exerce une pression sur le piston de commande (62) prend appui sur la chemise de cylindre (40).

8. Dispositif selon la revendication 6 ou 7, **caractérisé en ce que** le piston de commande (62) bute contre une butée (54) de la chemise de cylindre (40) et entraîne cette dernière.
